# EUROPÄISCHE PATENTANMELDUNG

(11) **EP 3 078 816 A1**
(43) Veröffentlichungstag der Anmeldung: **12.10.2016**
(21) Anmeldenummer: 15162591.0
(22) Anmeldetag: 07.04.2015
(51) Int. Cl.: F01D 17/02, F01D 17/16, F04D 27/02, F04D 29/46, F01D 21/00, F02C 9/22, F01D 17/20

(54) **VORRICHTUNG ZUR DREHWINKELERFASSUNG EINSTELLBARER LEITSCHAUFELN**

(71) Anmelder: Siemens Aktiengesellschaft, 80333 München (DE)
(72) Erfinder: Gamm, Hans-Georg, 46535 Dinslaken (DE); Waltke, Ulrich, 45468 Mülheim an der Ruhr (DE)

(57) **Zusammenfassung**

Die Erfindung betrifft eine Vorrichtung (100) zur Drehwinkelerfassung der Lage einer Mehrzahl an einstellbaren Leitschaufeln (11) einer Gasturbine (10), welche mindestens drei Drehwinkelsensoren (1, 2, 3) an jeweils voneinander unterschiedlichen Orten der Gasturbine (10) umfasst, die dazu ausgebildet sind, an den jeweiligen Orten den Drehwinkel (D1, D2, D3) von Leitschaufeln zu messen, und weiterhin umfassend eine Auswerteeinheit (20), welche dazu ausgebildet ist, mindestens drei Drehwinkeländerungen (Δ12, Δ23, Δ13) zwischen jeweils zwei unterschiedlichen Drehwinkelsensoren (1, 2, 3) zu berechnen, und die mindestens drei Drehwinkeländerungen (Δ12, Δ23, Δ13) bereit zu stellen.

## Beschreibung

Die vorliegende Erfindung betrifft eine Vorrichtung zur Drehwinkelerfassung der Lage einer Mehrzahl an einstellbaren Leitschaufeln, sowie eine Gasturbine umfassend eine solche Vorrichtung.

Leitschaufeln einer Gasturbine können durch eine geeignete Wahl des Drehwinkels zur Regulierung der Ansaugluftmenge eingestellt werden. Hierbei können unterschiedliche mechanische Vorrichtungen die Änderung des Drehwinkels der Leitschaufeln bewirken. Ein typischer, aus dem Stand der Technik bekannter Mechanismus ermöglichst etwa mittels eines Drehrings (auch als Verstellring bezeichnet), welcher in Umfangsrichtung des Gehäuses der Gasturbine senkrecht zur Längserstreckungsrichtung des Gasturbinenläufers verschoben werden kann, alle Leitschaufeln einer Leitschaufelstufe simultan einzustellen. Hierbei sind die Leitschaufeln durch einen geeigneten mechanischen Übersetzungsmechanismus mit dem Drehring gekoppelt.

Bei Betrieb solcher mechanischer Vorrichtungen hat sich jedoch oftmals gezeigt, dass die Drehwinkeleinstellung der Leitschaufeln einer Leitschaufelstufe nicht gleichmäßig bzw. einheitlich vorgenommen werden kann. Denn eine mechanische Verlagerung bzw. eine materialtechnische Verformung etwa der mechanischen Vorrichtung sorgt für eine ungleichmäßige Übersetzung der Bewegung derselben auf die einzelnen Leitschaufeln. Infolge dessen können sich jedoch über den Querschnitt des Ansaugströmungskanals der Gasturbine unterschiedliche Strömungszustände ergeben, die zu einer unvorteilhaften Verteilung des Ansaugluftstroms und der Belastung der der Leitschaufelreihe benachbarten Laufschaufelreihen in dem Verdichter der Gasturbine führen, und damit zu vermeiden sind.

Aus dem der Anmelderin bekannten internen Stand der Technik werden die aktuellen Drehwinkeleinstellungen der Leitschaufeln einer Stufe durch geeignete Drehwinkelsensoren erfasst. So werden etwa zwei dieser Drehwinkelsensoren an gegenüberliegenden Seiten der Gasturbine angebracht und erfassen die Verstellung der Leitschaufeln mittels einer geeigneten Kopplung mit dem Verstellmechanismus. Konkret sind die beiden Drehwinkelsensoren etwa direkt oder indirekt mit den Leitschaufeln verbunden und erfassen eine Winkeländerung bei dessen Verschiebung in Umfangsrichtung. Bei der Verstellung der Verstellvorrichtung können die beiden Sensoren also jeweils einen Drehwinkel erfassen, wobei aus dem Vergleich beider Drehwinkel etwa auf eine mittlere Verstellung der Leitschaufeln geschlossen werden kann.

Bei Betrieb eines solchen Verstellmechanismus hat sich jedoch gezeigt, dass nicht nur die Drehsensoren möglicherweise fehlerhafte Werte liefern können, sondern auch die Verstellvorrichtung aufgrund etwa mechanischer Verformung bzw. ungewünschter Änderungen der Lageposition für eine Abweichung der beiden Messungen verantwortlich sein kann. Aufgrund dieser Einflüsse kann aber in einigen Fällen aufgrund des Vergleichs der gemessenen Drehwinkel nicht mehr auf eine sinnvolle mittlere Drehwinkeleinstellung der Leitschaufeln geschlossen werden. Insbesondere aber wenn ein Drehwinkelsensor beschädigt ist, kann so nicht mehr zuverlässig auf eine mittlere Verstellung der Leitschaufeln geschlossen werden. Ebenso wenig kann es möglich sein, den fehlerhaften Drehwinkelsensor fehlerfrei zu identifizieren, so dass dieser etwa in den vorgenommenen Messungen unberücksichtigt bleiben kann.

Auch das Vorsehen von redundanten Drehwinkelsensoren an einem Anbringungsort, etwa zur Identifizierung von fehlerhaften Drehwinkelsensoren, stellt sich als nachteilig heraus, da eine deutlich größere Anzahl an Drehwinkelsensoren vorgehalten werden muss. Zudem erlauben solche redundante Drehwinkelsensoren nicht die mechanische Verformung etwa der Vorrichtung zum Einstellen des Drehwinkels der Leitschaufeln fehlerfrei zu identifizieren.

Folglich stellt sich das technische Erfordernis, eine geeignete Vorrichtung zur Drehwinkelerfassung der Lage von einstellbaren Leitschaufeln an der Gasturbine vorzuschlagen, welche die oben beschriebenen Nachteile aus dem Stand der Technik vermeiden kann. Insbesondere stellt sich das technische Erfordernis, eine Vorrichtung zur Drehwinkelerfassung vorzuschlagen, welche auch problemlos fehlerhafte Drehwinkelsensoren in dieser Vorrichtung zu identifizieren erlaubt. Ebenso soll die Vorrichtung unterscheiden können zwischen einem Messergebnis, welches durch einen fehlerhaften Drehwinkelsensor erzielt wurde und einem Messergebnis, welches etwa durch mechanische Verformung der Bauteile der mechanischen Verstellvorrichtung resultiert.

Diese der Erfindung zugrundeliegende Aufgabe wird gelöst durch eine Vorrichtung gemäß Anspruch 1 sowie durch eine Gasturbine gemäß Anspruch 9.

Insbesondere werden die der Erfindung zugrunde liegenden Aufgaben gelöst durch eine Vorrichtung zur Drehwinkelerfassung der Lage einer Mehrzahl an einstellbaren Leitschaufeln einer Gasturbine, welche mindestens drei Drehwinkelsensoren an jeweils voneinander unterschiedlichen Orten der Gasturbine umfasst, die dazu ausgebildet sind, an den jeweiligen Orten den Drehwinkel von Leitschaufeln zu messen, und weiterhin umfassend eine Auswerteeinheit, welche dazu ausgebildet ist, mindestens drei Drehwinkeländerungen zwischen jeweils zwei unterschiedlichen Drehwinkelsensoren zu berechnen, und die mindestens drei Drehwinkeländerungen bereitzustellen.

Weiterhin werden die der Erfindung zugrundeliegenden Aufgaben gelöst durch eine Gasturbine, umfassend eine solche vorab, wie auch nachfolgend dargestellte Vorrichtung zur Drehwinkelerfassung der Lage einer Mehrzahl an einstellbaren Leitschaufeln einer Gasturbine.

Der Kern der Erfindung liegt zunächst darin, dass wenigstens drei Drehwinkelsensoren von der Vorrichtung zur Drehwinkelerfassung umfasst sein sollen, welche jeweils an unterschiedlichen Orten der Gasturbine angebracht sind. Damit können drei jeweils unabhängige Drehwinkelmessungen im Sinne unabhängiger Freiheitsgrade erfolgen, die miteinander verglichen werden können.

Weiterhin sieht die Erfindung vor, dass die Ergebnisse dieser mindestens drei Drehwinkelmessungen, in einem Berechnungsverfahren verwendet werden, um wiederum mindestens drei Drehwinkeländerungen zu berechnen. Diese Drehwinkeländerungen ergeben sich durch Vergleich jeweils zweier unterschiedlicher gemessener Drehwinkel. Sollten mehr als drei Drehwinkel gemessen werden, könnten auch mehr als zwei Drehwinkel zur Berechnung in diese Drehwinkeländerungen einfließen. Diese Berechnungen werden in einer Auswerteeinheit ausgeführt, welche nach erfolgter Berechnung der mindestens drei Drehwinkeländerungen diese zur weiteren Nutzung bereit stellen kann.

Aufgrund der Berechnung der Drehwinkeländerungen anstelle von absoluten Drehwinkeln sind insgesamt mindestens drei Messwerte vorhanden, die jeweils mindestens zwei, bzw. genau zwei unterschiedliche Messorte zueinander in Beziehung setzen. Aufgrund dieser Beziehung lassen sich etwa bei Störung eines Drehwinkelsensors, diese Störung relativ sicher identifizieren, indem nämlich zwei Drehwinkeländerungen von dieser Störung verhältnismäßig stärker betroffen sind, jedoch die dritte verhältnismäßig geringer. Damit unterscheiden sich die mindestens drei Drehwinkeländerungen auch von Messergebnissen, welche etwa aufgrund einer geometrischen Verformung der Bauteile des mechanischen Verstellmechanismus resultieren. Bei einer Verformung oder auch ungewünschten Lageänderung dieser Bauteile, insbesondere etwa des Drehrings, ergibt sich ein Satz an Drehwinkeländerungen der sich signifikant unterscheidet, etwa von einem Satz an Drehwinkeländerungen einer ungestörten Standardmessung. Ebenso unterscheidet sich der Satz an Drehwinkeländerungen auch von einem Satz an solchen Drehwinkeländerungen die nach Schadensnahme eines Drehwinkelsensors berechnet wurden. Aufgrund der noch weiter unten genauer auszuführenden Einflüsse der einzelnen Faktoren auf diesen Satz an Drehwinkeländerungen kann der Betreiber aufgrund der Charakteristika des Satzes zwischen verschiedenen Betriebsproblemen diskriminieren und je nach Vorfall eine geeignete Maßnahme einleiten.

An dieser Stelle ist darauf hinzuweisen, dass die erfindungsgemäße Lage der Mehrzahl an einstellbaren Leitschaufeln eine Drehlage betrifft, wobei die zugehörige Drehachse typischerweise bei Normalbetrieb der Gasturbine im Wesentlichen senkrecht, oder beinahe senkrecht zu der Längserstreckungsrichtung des Gasturbinenläufers angeordnet ist. Die erfindungsgemäßen Leitschaufeln sind zudem ortsfest in der Gasturbine angebracht, können also nicht, wie etwa die Laufschaufeln, eine Drehbewegung zusammen mit dem Gasturbinenläufer vollführen. Die Leitschaufeln dienen lediglich zur ortsfesten Konditionierung des Ansaugluftstroms und können derart gedreht werden, dass der Anströmwinkel der nachfolgenden Laufschaufelreihe und damit deren aerodynamische Belastung verändert werden kann. Die Leitschaufeln können hierbei sowohl Vorleitschaufeln, also Leitschaufeln einer ersten Leitschaufelstufe in der Gasturbine sein, wie auch solche einer strömungstechnisch nachfolgenden Leitschaufelstufe.

Weiterhin ist darauf hinzuweisen, dass eine Drehwinkeländerung typischerweise durch eine Subtraktion der einzelnen gemessenen Drehwinkel berechnet wird. Je nach Wahl der Definition der Drehwinkel kann auch eine betragsmäßige Subtraktion einzelner Drehwinkel der einzelnen Drehwinkelsensoren zur Berechnung einer Drehwinkeländerung sinnvoll sein. Bevorzugt wird diese Berechnung der Drehwinkeländerung aber ohne weitere Wichtung der einzelnen Drehwinkel vorgenommen. Jedoch ist zur Definition des Drehwinkels erforderlich, dass zu jedem Zeitpunkt einer Messung eines Drehwinkels auch ein entsprechender Vergleichswert bzw. Referenzwert der Winkelstellung zur Verfügung steht. Dieser kann beispielsweise eine Nullstellung des Drehwinkelsensors sein, welcher vorab festgelegt wurde. Geeignete Eichmessungen hierzu können bei Inbetriebnahme der Gasturbine durchgeführt werden. Dieser Vergleichs- bzw. Referenzwert kann aber auch im Laufe des Betriebs einer Gasturbine geändert bzw. neu definiert werden. Die Berechnungen der jeweiligen Drehwinkeländerungen berücksichtigen dann jedoch eine solche neue Festlegung.

Gemäß einer ersten bevorzugten Ausführungsform der Erfindung ist vorgesehen, dass die mindestens drei Drehwinkelsensoren in einer Schnittebene senkrecht zur Längserstreckungsrichtung des Gasturbinenläufers angeordnet sind. Folglich kann in der Querschnittsebene eine Erfassung verschiedener Drehwinkel erfolgen, und mögliche Betriebsprobleme, welche eine einzige Leitschaufelstufe betreffen, schnell erfasst werden. Insbesondere wenn die Leitschaufeln, welche die Schnittebene schneiden, durch einen gemeinschaftlichen Verstellmechanismus betätigt werden können, erweist sich eine solche Anordnung als vorteilhaft, da auf diese Art und Weise geometrische Verformungen oder Lageänderungen dieses Verstellmechanismus gezielt erfasst werden können.

Weiterhin ist nach einem vorteilhaften Aspekt der Erfindung vorgesehen, dass die mindestens drei Drehwinkelsensoren jeweils an einem Übersetzungsteil angebracht sind, welches direkt oder auch indirekt mit einer Mehrzahl an Leitschaufeln mechanisch gekoppelt ist. Bevorzugt ist das Übersetzungsteil mit allen Leitschaufeln einer Stufe gekoppelt, indem etwa die Drehbewegung all dieser Leitschaufeln durch eine geeignete Verstellvorrichtung, etwa einem die Gasturbine umlaufenden Drehring (Verstellring), veranlasst werden kann, wobei diese Verstellvorrichtung wiederum mit dem Übersetzungsteil direkt oder auch indirekt gekoppelt ist.

Alternativ oder auch zusätzlich kann das Übersetzungsteil mit einer vorbestimmten Leitschaufel drehmechanisch gekoppelt sein, so dass bei Drehung dieser Leitschaufel ein Drehwinkel durch den Drehwinkelsensor erfasst werden kann. Das ausführungsgemäße Übersetzungsteil erlaubt eine sichere Anbringung des jeweiligen Drehwinkelsensors. Insbesondere kann durch Vorsehen des Übersetzungsteils auch eine geometrische Verformung bzw. eine sich veränderte Lage einzelner Bauteile der Verstellvorrichtung messtechnisch erfasst werden, da durch eine Zusammenwirkung mit dem Übersetzungsteil auch solche Leitschaufeln Auswirkung auf eine Drehwinkelmessung haben können, die nicht direkt mit dem jeweiligen Übersetzungsteil gekoppelt sind.

Weiterhin erweist es sich als vorteilhaft, wenn gemäß einer weiteren Ausführungsform der Erfindung die mindestens drei Drehwinkelsensoren am Verdichter der Gasturbine angeordnet sind. Bevorzugt sind es genau drei Drehwinkelsensoren.

Gemäß einer weiteren besonders bevorzugten Ausführungsform der Erfindung ist es vorgesehen, dass genau drei Drehwinkelsensoren vorgesehen sind, welche jeweils mit einem Winkelversatz von 120° zu den benachbarten Drehwinkelsensoren in Umfangsrichtung senkrecht zur Längserstreckungsrichtung des Gasturbinenläufers angeordnet sind. Diese geometrische Anordnung erlaubt insbesondere die Einflussnahme der Verformung bzw. eine geometrische Lageänderung einzelner Bauteile der mechanischen Verstellvorrichtung, wie etwa des Drehrings, zu erfassen. Insbesondere eine exzentrische Verlagerung des Drehrings kann so nachgewiesen werden. So zeigt es sich insbesondere, dass charakteristische Sätze an Drehwinkeländerungen durch derartige geometrische Verformungen bzw. Lageänderungen entstehen, die aufgrund ihrer charakteristischen Art leicht identifizierbar sind.

Alternativ zu dieser Ausführungsform kann auch vorgesehen sein, dass genau drei Drehwinkelsensoren vorgesehen sind, wobei zwei Drehwinkelsensoren mit einem Winkelversatz von 180° zueinander in Umfangsrichtung senkrecht zur Längserstreckungsrichtung des Gasturbinenläufers angeordnet sind und der dritte Drehwinkelsensor zu den beiden anderen Drehwinkelsensoren jeweils einen Winkelversatz von 90° in Umfangsrichtung senkrecht zur Längserstreckungsrichtung des Gasturbinenläufers aufweist. Bei einer solchen Konstellation sind die beiden Drehwinkelsensoren, welche mit einem Winkelversatz von 180° zueinander angeordnet sind, besonders gut dazu geeignet, bei Vergleich ihrer Messungen miteinander, einen möglichen Schadensfall an einem der beiden Drehwinkelsensoren nachweisen zu können. Der dritte Drehwinkelsensor, welcher um 90° in Umfangsrichtung im Vergleich zu den beiden anderen Drehwinkelsensoren angeordnet ist, dient in erster Linie zur Identifikation von geometrischen Verformungen bzw. Lageänderungen einzelner Bauteile der Gasturbine. Dennoch arbeiten die drei ausführungsgemäßen Drehwinkelsensoren weiterhin derart zusammen, dass aus den jeweiligen Drehwinkeländerungen, welche in der Auswerteeinheit berechnet werden, auf einen vorbestimmten Betriebszustand geschlossen werden kann.

Gemäß einer weiteren vorteilhaften Ausführungsform der Erfindung ist vorgesehen, dass die Auswerteeinheit dazu ausgebildet ist, ein Warnsignal auszugeben, wenn sich zwei Drehwinkeländerungen mehr als eine vorgegebene erste Änderungsgröße vergrößert haben und eine Drehwinkeländerung mehr als eine vorgegebene zweite Änderungsgröße verkleinert hat. Diese Charakteristik an Drehwinkeländerungen ergibt sich, wie weiter unten noch im Detail ausgeführt werden wird, vor allem bei Schadensnahme eines Drehwinkelsensors. Insofern lässt die Charakteristik dem Betreiber erkennen, dass einer der Drehwinkelsensoren mit großer Wahrscheinlichkeit auszutauschen ist, wobei bei nächster Wartung dieser Austausch entsprechend vorzunehmen wäre. Das Warnsignal signalisiert also dem Betreiber, dass eine Schadensnahme eines Drehwinkelsensors mit großer Wahrscheinlichkeit eingetreten ist, wobei jedoch eine geometrische Verformung bzw. Lageänderung einzelner Bauteile der Verstellvorrichtung weitgehend ausgeschlossen werden kann.

Gemäß einer Weiterbildung dieser Ausführungsform kann vorgesehen sein, dass die Auswerteeinheit dazu ausgebildet ist, den Drehwinkelsensor, welcher zu den zwei Drehwinkeländerungen beigetragen hat, die sich mehr als eine vorgegebene erste Änderungsgröße vergrößert haben, bei zukünftigen Berechnungen unberücksichtigt zu lassen. In anderen Worten kann die Auswerteeinheit dazu übergehen, den möglicherweise beschädigten Drehwinkelsensor in weiteren Berechnungen der Auswerteeinheit unberücksichtigt zu lassen. Folglich kann etwa eine Änderung des Gasturbinenbetriebs unterbleiben, wenn nämlich mit relativ großer Sicherheit fest steht, dass lediglich ein Drehwinkelsensor Schaden genommen hat, und nicht schwerwiegendere Probleme für den Betrieb der Gasturbine bestehen. Vorteilhafterweise kann aufgrund dieser Unterscheidung auch das notfallmäßige Abschalten einer Gasturbine unterbleiben, welches bei bestimmten Schadensfallcharakteristiken vorgenommen würde.

Nachfolgend soll die Erfindung anhand einzelner Figuren im Detail näher beschrieben werden. Hierbei ist darauf hinzuweisen, dass die in den Figuren gezeigten Bauteile lediglich schematisch zu verstehen sind, und eine mangelnde Ausführbarkeit aufgrund dieser schematischen Darstellung nicht festgestellt werden kann.

Weiterhin ist darauf hinzuweisen, dass die nachfolgend dargestellten Merkmale in beliebiger Kombination miteinander beansprucht werden, soweit sie die der Erfindung zugrundeliegende Erfindungsaufgabe lösen können.

Ebenfalls ist darauf hinzuweisen, dass technische Merkmale, welche mit gleichen Bezugszeichen versehen sind, gleiche technische Wirkung aufweisen sollen.

Hierbei zeigen:
- FIG 1: einen Ausschnitt einer ersten Ausführungsform einer erfindungsgemäßen Vorrichtung zur Drehwinkelerfassung in Querschnittansicht senkrecht zur Längserstreckungsrichtung des Gasturbinenläufers einer Gasturbine;
- FIG 2: eine perspektivische Ansicht auf einen Drehwinkelsensor, wie er etwa von der in FIG 1 gezeigten Vorrichtung zur Drehwinkelerfassung umfasst ist;
- FIG 3: eine schematische Darstellung einer weiteren Ausführungsform der erfindungsgemäßen Vorrichtung zur Drehwinkelerfassung in Querschnittansicht senkrecht zur Längserstreckungsrichtung des Gasturbinenläufers einer Gasturbine nach Lageänderung eines Drehrings der Gasturbine;
- FIG 4: eine schematische Darstellung der mindestens drei Drehwinkeländerungen im Vergleich nach entsprechender Berechnung aufgrund von Messungen, die etwa bei geometrischer Verlagerung des Drehrings, wie in FIG 3 dargestellt, resultieren.
- FIG 5: eine schematische Darstellung der mindestens drei Drehwinkeländerungen im Vergleich nach entsprechender Berechnung aufgrund von Messungen, die etwa nach Schadensnahme eines Drehwinkelsensors, resultieren.

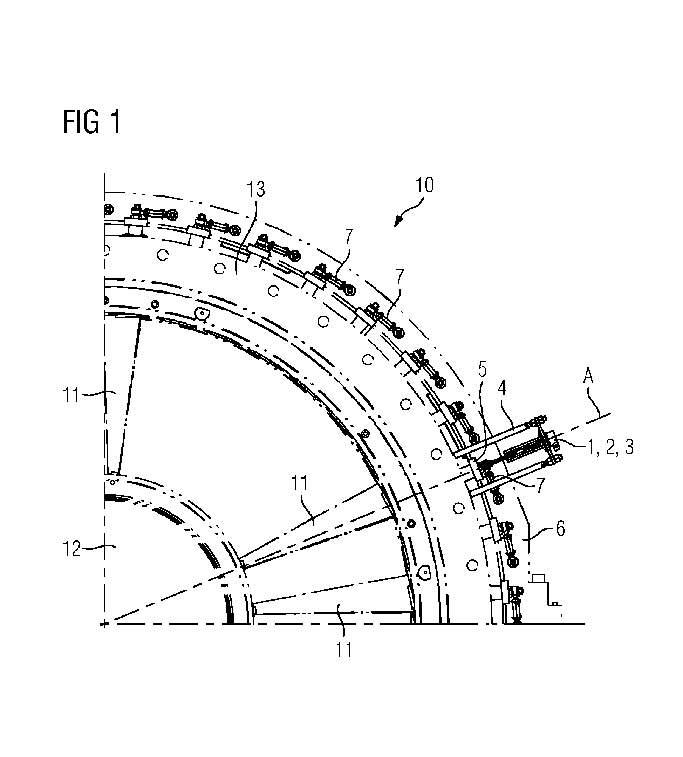

FIG 1 zeigt einen Quadranten eines Querschnitts durch eine Ausführungsform einer erfindungsgemäßen Gasturbine 10 senkrecht zur Längserstreckungsrichtung des Gasturbinenläufers 12. Die gezeigte Querschnittansicht zeigt also in anderen Worten lediglich 1/4 des Gasturbinenläufers 12 der gezeigten Gasturbine 10.

Der gezeigte Querschnitt betrifft hierbei den Verdichter 13, in welchem sich eine Stufe an Leitschaufeln 11 befindet, die ortsfest um den Gasturbinenläufer 12 herum angeordnet sind. Die Leitschaufeln 11 können trotz ihrer ortsfesten Lage in Bezug auf den Gasturbinenläufer 12 verdreht werden, wobei eine entsprechende Verdrehung um eine beispielhaft gezeigte Drehachse A erfolgt. In Verlängerung einer solchen Achse A ist ein einer der Drehwinkelsensoren 1, 2, 3 angeordnet. Die Verdrehung der einzelnen Leitschaufeln 11 wird durch einen hydraulisch angetriebenen Drehring 6 bewirkt, dessen Bewegung durch einzelne Übersetzungsstangen 7 sowie jeweils ein Übersetzungsteil 5 im Bereich des Fußes einer Leitschaufel 11 in eine Drehbewegung übertragen wird.

Der Drehring 6 wird hierbei seinerseits durch eine gezielte Bewegung in Umfangsrichtung (also senkrecht zur Drehachse A) in der gezeigten Zeichenebene der Figur hydraulisch bewegt. Aufgrund der Bewegung, die dann als Drehbewegung an die Fußbereiche der jeweiligen Leitschaufeln 11 übertragen wird, kommt es zu einer gezielten Einstellung des Drehwinkels der einzelnen Leitschaufeln 11.

Um, wie weiter oben bereits ausgeführt, die Drehwinkeleinstellung der Leitschaufeln 11 genau erfassen zu können, sind insgesamt drei Drehwinkelsensoren 1, 2, 3 (vorliegend ist lediglich einer gezeigt) von der Vorrichtung zur Drehwinkelerfassung mit umfasst. Die Drehwinkelsensoren 1, 2, 3 sind auf einer geeignet ausgebildeten Haltevorrichtung 4 angeordnet, welche, wie die Leitschaufel 11 selbst, ortsfest im oder am Gehäuse der Gasturbine 10 angebracht ist. Wird nun der Drehring 6 verfahren, kommt es aufgrund der mechanischen Wirkverbindungen der einzelnen Bauteile zu einer entsprechenden Drehung des Übersetzungsteils 5 um die Drehachse A, wodurch ebenfalls eine entsprechende Drehwinkeleinstellung des betroffenen Drehwinkelsensors 1, 2, 3 erfolgt. Durch geeignetes Auslesen der so erfassten Drehwinkel D1, D2, D3 kann mittels der Auswerteeinheit 20 ein Satz an Drehwinkeländerungen Δ12, Δ23, Δ13 berechnet werden, indem etwa die erfassten Drehwinkel D1, D2, D3 voneinander subtrahiert werden. Je nach Charakteristik des so erfassten Satzes an Drehwinkeländerungen Δ12, Δ23, Δ13 können Rückschlüsse gezogen werden auf den Zustand der Drehwinkelsensoren 1, 2, 3 bzw. auch auf geometrische Veränderungen, etwa Lageänderungen einzelner Bauteile der Verstellvorrichtung, beispielsweise des Drehrings 6.

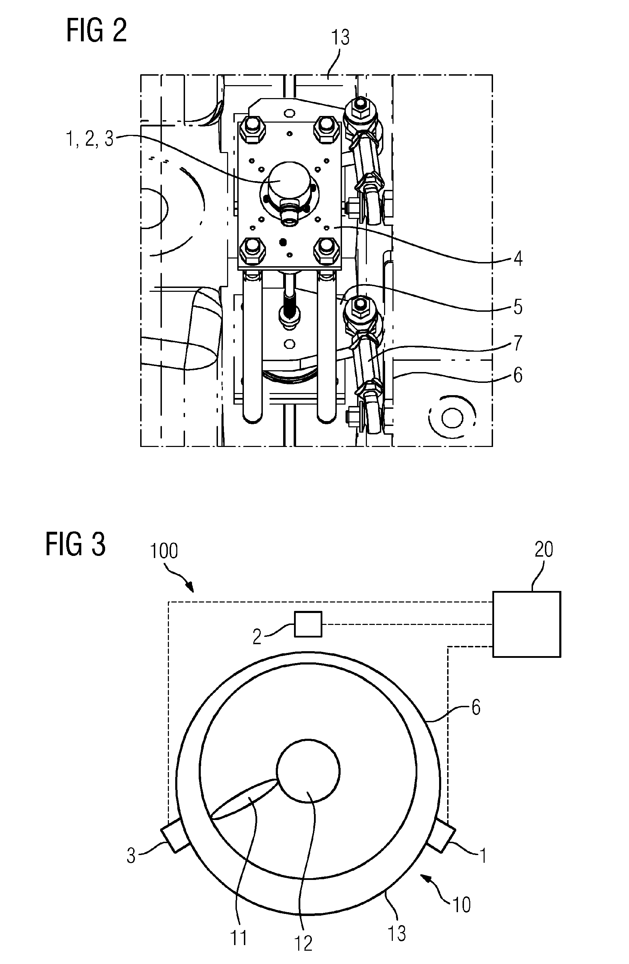

FIG 2 zeigt in perspektivischer Seitenansicht einen durch eine Haltevorrichtung 4 ortsfest angebrachten Drehwinkelsensor 1, 2, 3, welcher über eine nicht weiter mit Bezugszeichen versehene Stange mit einem Übersetzungsteil 5 drehmechanisch verbunden ist. Kommt es, wie weiter oben bereits erklärt, zu einem Verstellakt des Drehrings 6, werden die Übersetzungsstangen 7 im Wesentlichen entlang einer Umfangslinie der Oberfläche des Gehäuses der Gasturbine 10 verfahren, wodurch eine Drehung des Übersetzungsteils 5 um die nicht weiter gezeigte Drehachse A resultiert. Diese Drehung wird durch den Drehwinkelsensor 1, 2, 3 als Drehwinkel D1, D2, D3 erfasst. Durch entsprechende Berechnung einzelner Drehwinkeländerungen aufgrund dieser gemessenen Drehwinkel D1, D2, D3 kann so ein Satz an Drehwinkeländerungen Δ12,Δ23, Δ13 berechnet werden, welcher Rückschlüsse auf die bei Betrieb der Gasturbine 10 möglicherweise auftretenden drehwinkelspezifischen Probleme erlaubt.

FIG 3 zeigt eine schematische Schnittansicht senkrecht zum Gasturbinenläufer 12 einer Gasturbine 10 gemäß einer weiteren Ausführungsform der Erfindung. Umfasst ist eine Vorrichtung 100 zur Drehwinkelerfassung der Lage einer Mehrzahl an einstellbaren Leitschaufeln 11 (lediglich eine ist angedeutet), wobei genau drei Drehwinkelsensoren 1, 2, 3 an voneinander unterschiedlichen Orten der Gasturbine angebracht sind. Vergleichbar der in FIG 1 gezeigten Ausführungsform vermögen die drei Drehwinkelsensoren 1, 2, 3 insgesamt 3 Drehwinkel D1, D2, D3 der Leitschaufeln 11 zu erfassen, wobei die jeweiligen Drehwinkel D1, D2, D3 an eine Auswerteeinheit 20 übermittelt werden, die diese drei Drehwinkel D1, D2, D3 zueinander in Beziehung setzt. Die Auswerteeinheit 20 berechnet aus diesen Drehwinkeln D1, D2, D3 insgesamt drei Drehwinkeländerungen Δ12,Δ23, Δ13 die sie für weitere Analysezwecke bereitstellen kann. Ist nun, wie vorliegend gezeigt, beispielsweise aufgrund einer Lageänderung des Drehrings 6, eine Abweichung der einzelnen Drehwinkel D1, D2, D3 von solchen bei unveränderter Lage des Drehrings 6 die Folge, ergibt sich ein charakteristischer Satz an Drehwinkeländerungen Δ12,Δ23, Δ13, aus welchem eine Betriebsdiagnose diesen Sachverhalt eines lageveränderten Drehrings 6 erkennen lassen kann.

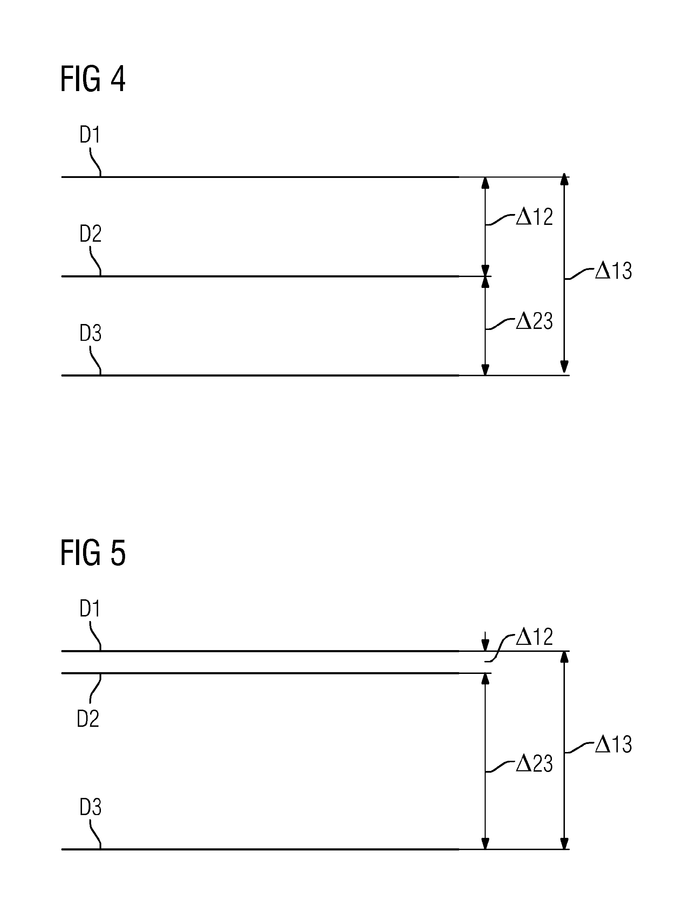

Sind nämlich alle drei Drehwinkelsensoren 1, 2, 3 funktionstüchtig, bewirkt die gezeigte Lageänderung des Drehrings 6 bei dem Drehwinkelsensor 2 keine wesentliche Abweichung des erfassten Drehwinkels D2. Hingegen die Drehwinkel D1 und D3 erfahren aufgrund der Lageänderung des Drehrings 6 eine zusätzliche Drehwinkelkomponente, so dass beide im Vergleich zum Normalbetrieb ohne Lageänderung des Drehrings 6 betragsmäßig größer ausfallen. Wird nun aus diesen drei Drehwinkeln D1, D2, D3 in der Auswerteeinheit 20 der Satz an Drehwinkeländerungen Δ12, Δ23, Δ13 berechnet, zeigt sich, wie in FIG 4 dargestellt, dass insgesamt zwei Drehwinkeländerungen Δ12, Δ23 im Wesentlichen betragsgleich sind, sich jedoch deutlich unterscheiden von der dritten Drehwinkeländerung Δ13, welche betragsmäßig deutlich größer ist als die anderen beiden Drehwinkeländerungen Δ12 und Δ23.

Im Vergleich hierzu zeigt FIG 5 diagrammatisch den Satz an Drehwinkeländerungen Δ12, Δ23 und Δ13 bei einem funktionsuntüchtigen Drehwinkelsensor 2. Ist dieser Drehwinkelsensor 2 nämlich etwa beschädigt und liefert übermäßig große Werte, gibt er beispielsweise zu große Drehwinkel D2 aus. In Konsequenz ergibt sich ein Satz an drei Drehwinkeländerungen Δ12, Δ23 und Δ13, bei welchen die Drehwinkeländerung Δ12 betragsmäßig deutlich kleiner ist als die anderen beiden Drehwinkeländerungen Δ23 und Δ13. Insofern ergibt sich auch eine Charakteristik des Satzes an Drehwinkeländerungen Δ12, Δ23 und Δ13, welche grundlegend verschieden ist, zu der des in FIG 4 bildlich dargestellten Satzes an Drehwinkeländerungen.

Möchte ein Betreiber einer Ausführungsform der erfindungsgemäßen Gasturbine 10 nun unterscheiden zwischen einem Betrieb bei funktionsuntüchtigem Sensor, von einem Betrieb, bei welchem etwa Bauteile geometrisch verlagert oder verformt wurden, reicht es dem Betreiber aus, den Satz an Drehwinkeländerungen Δ12, Δ23 und Δ13 zu betrachten. Stellt der Betreiber hierbei etwa fest, dass zwei Drehwinkeländerungen größer sind als eine vorgegebene erste Änderungsgröße und eine dritte Drehwinkeländerung kleiner ist als eine zweite Änderungsgröße, kann der Betreiber davon ausgehen, dass eine Schadensnahme eines Drehwinkelsensors 1, 2, 3 erfolgt ist. Die Änderungsgrößen sind allgemein im Sinne eines Grenzwertes bestimmt und können etwa vorab durch Versuche festgelegt werden. Je nach Ausführungsform der Auswerteeinheit 20, kann bei einer solchen Konstellation auch ein entsprechendes Warnsignal ausgegeben werden. Der Betreiber kann zudem nach Identifikation des beschädigten Drehwinkelsensors diesen aus zukünftigen Messanalysen entfernen. Ebenfalls ist es denkbar, dass die Auswerteeinheit 20 bereits einen solchen Ausschluss des beschädigten Drehwinkelsensors selbst automatisiert vornimmt.

Weitere Ausführungsformen ergeben sich aus den Unteransprüchen.

## Patentansprüche

1. Vorrichtung (100) zur Drehwinkelerfassung der Lage einer Mehrzahl an einstellbaren Leitschaufeln (11) einer Gasturbine (10), welche mindestens drei Drehwinkelsensoren (1, 2, 3) an jeweils voneinander unterschiedlichen Orten der Gasturbine (10) umfasst, die dazu ausgebildet sind, an den jeweiligen Orten den Drehwinkel (D1, D2, D3) von Leitschaufeln zu messen, und weiterhin umfassend eine Auswerteeinheit (20), welche dazu ausgebildet ist, mindestens drei Drehwinkeländerungen (Δ12, Δ23, Δ13) zwischen jeweils zwei unterschiedlichen Drehwinkelsensoren (1, 2, 3) zu berechnen, und die mindestens drei Drehwinkeländerungen (Δ12, Δ23, Δ13) bereit zu stellen.

2. Vorrichtung nach Anspruch 1,
**dadurch gekennzeichnet, dass**
die mindestens drei Drehwinkelsensoren (1, 2, 3) in einer Schnittebene senkrecht zur Längserstreckungsrichtung des Gasturbinenläufers (12) angeordnet sind.

3. Vorrichtung nach einem der vorhergehenden Ansprüche,
**dadurch gekennzeichnet, dass**
die mindestens drei Drehwinkelsensoren (1, 2, 3) jeweils an einem Übersetzungsteil (5) angebracht sind, welches direkt oder indirekt mit einer Mehrzahl an Leitschaufeln (11) mechanisch gekoppelt ist.

4. Vorrichtung nach einem der vorhergehenden Ansprüche,
**dadurch gekennzeichnet, dass**
die mindestens drei Drehwinkelsensoren (1, 2, 3) am Verdichter (13) der Gasturbine (10) angeordnet sind.

5. Vorrichtung nach einem der vorhergehenden Ansprüche,
**dadurch gekennzeichnet, dass**
genau drei Drehwinkelsensoren (1, 2, 3) vorgesehen sind, welche jeweils mit einem Winkelversatz von 120° zu den jeweils benachbarten Drehwinkelsensoren (1, 2, 3) in Umfangsrichtung senkrecht zur Längserstreckungsrichtung des Gasturbinenläufers (12) angeordnet sind.

6. Vorrichtung nach einem der vorhergehenden Ansprüche 1 bis 4,
**dadurch gekennzeichnet, dass**
genau drei Drehwinkelsensoren (1, 2, 3) vorgesehen sind, wobei zwei Drehwinkelsensoren (1, 2, 3) mit einem Winkelversatz von 180° zueinander in Umfangsrichtung senkrecht zur Längserstreckungsrichtung des Gasturbinenläufers (12) angeordnet sind und der dritte Drehwinkelsensor (1, 2, 3) zu den beiden anderen Drehwinkelsensoren (1, 2, 3) jeweils einen Winkelversatz von 90° in Umfangsrichtung senkrecht zur Längserstreckungsrichtung des Gasturbinenläufers (12) aufweist.

7. Vorrichtung nach einem der vorhergehenden Ansprüche,
**dadurch gekennzeichnet, dass**
die Auswerteeinheit (20) dazu ausgebildet ist, ein Warnsignal auszugeben, wenn sich zwei Drehwinkeländerungen (Δ12, Δ23, Δ13) mehr als eine vorgegebene erste Änderungsgröße vergrößert haben und eine Drehwinkeländerung (Δ12, Δ23, Δ13) mehr als eine vorgegebene zweite Änderungsgröße verkleinert hat.

8. Vorrichtung nach Anspruch 7,
**dadurch gekennzeichnet, dass**
die Auswerteeinheit (20) dazu ausgebildet ist, den Drehwinkelsensor (1, 2, 3), welcher zu den zwei Drehwinkeländerungen (Δ12, Δ23, Δ13) beigetragen hat, die sich mehr als eine vorgegebene erste Änderungsgröße vergrößert haben, bei zukünftigen Berechnungen unberücksichtigt zu lassen.

9. Gasturbine (12) umfassend eine Vorrichtung zur Drehwinkelerfassung der Lage einer Mehrzahl an einstellbaren Leitschaufeln (11) einer Gasturbine (12) nach einem der vorhergehenden Ansprüche.
